# EUROPEAN PATENT SPECIFICATION

(11) **EP 3 725 468 B1**
(45) Date of publication and mention of the grant of the patent: **07.06.2023**
(21) Application number: 19759985.5
(22) Date of filing: 22.01.2019
(51) Int. Cl.: B25H 3/02, F21V 33/00

(54) **TOOLBOX WITH LUMINESCENT SURFACE**
WERKZEUGKASTEN MIT LEUCHTFLÄCHE
BOÎTE À OUTILS À SURFACE LUMINESCENTE

(30) Priority: 28.02.2018 ES 201830267 U
(43) Date of publication of application: 21.10.2020
(73) Proprietor: Industrias Tayg, S.L.U., 46469 - Beniparrell (Valencia) (ES)
(72) Inventor: HOSTALET AUNION, Antonio, 46469 - Beniparrell (Valencia) (ES)
(74) Representative: Sahuquillo Huerta, Jesús
(86) International application number: PCT/ES2019/070029
(87) International publication number: WO 2019/166675

(56) References cited:
- EP-A2- 2 226 163
- WO-A1-2005/053474
- CN-A- 104 029 186
- CN-A- 107 351 040
- CN-A- 107 717 921
- CN-B- 104 029 186
- CN-U- 201 889 788
- CN-U- 202 079 586
- CN-U- 205 600 683
- US-A1- 2001 028 561
- US-A1- 2004 228 114
- US-A1- 2011 234 059
- US-A1- 2012 326 406
- US-A1- 2014 340 034

## Description

The purpose of this specification is a toolset carry-box with a luminescent surface, whose main advantage lies in incorporating parts of its luminescent surface, which allows its user to locate it swiftly and easily, in conditions of poor visibility and/or allow other users to locate it in situations of identical visibility.

### BACKGROUND OF THE INVENTION

Currently, toolboxes or tool holders are devised as receptacles to carry work tools or other related items (such as pegs, screws or similar) that allow their user (operator) to comfortably organize all the necessary elements to correctly carry out their work properly.

The main drawback of these toolboxes is that they are usually "specialized" in various fields, thus each element requires its own box or is organized in different boxes, which invariably means that operators exit their means of transport weighed down, for example a box for machinery (for example, a drill), another for accessories (screws, plugs or similar), another for tools (hammers, screwdrivers, etc.). This implies that for the transportation of the latter, several trips must be made from the means of transport to the workplace, to shuttle everything necessary for the performance of the functions entrusted to the operator.

This becomes an element of risk, when these functions are performed at certain moments of low visibility, which implies that, on the one hand, the operator cannot easily locate all the elements necessary for the required tasks (meaning important time is lost in locating all the boxes needed to perform these tasks), as well as in terms of safety (knocks with these boxes or the fact they are not visible to third parties, which might lead to minor accidents).

Document US 2011/234059 A1 discloses a system and method for a toolbox that includes: a body configured to receive casters on a bottom portion of the body; a lid coupled to the body, the lid including a raised portion on a top exterior surface of the lid to facilitate stabilization of the toolbox in a stacked configuration with a second toolbox; a front door coupled to the body and substantially centered in a front side of the toolbox, wherein the front door is at least 2 feet by at least 2 feet in size; lifting elements coupled to an upper portion of the body on each side of the lid to facilitate lifting of the toolbox and also to facilitate stabilization of the toolbox in the stacked configuration; and skid components coupled to a lower portion of the body to facilitate lifting of the toolbox and also to facilitate stabilization of the toolbox in the stacked configuration.

Document CN 104 029 186 B relates to a kind of multifunctional toolbox. This multifunctional tool box comprises casing, diagonal cutting pliers, screwdriver and connecting rod, casing comprises housing, middle cover and end cap and three make by transparent plastic material, middle cover is clamped between housing and end cap, shell inner surface offers the first groove for placing diagonal cutting pliers, for the second groove that placing screws is criticized, for placing the 3rd groove of connecting rod, the inner surface of end cap is embedded with magnetic sheath collet chuck and two magnetic screwdriver bits folder, magnetic sheath collet chuck offer a row sleeve hole and be all inserted with sleeve in each sleeve hole, each magnetic screwdriver bit folder all offers a row screwdriver bit hole and is all inserted with screwdriver bit in each screwdriver bit hole, in the middle part of external face, perspective board is installed, perspective board is embedded with three brand sticking blocks and three arc phosphor strips. This multifunctional toolbox has advantage reasonable in design, easy to use, to be convenient to searching.

Document US 2014/340034 A1 discloses a handheld tool carrying case includes at least one interior structuring unit having at least one interior structuring element, which is provided to delimit at least one inductive charge receiving region for at least one handheld tool battery. The interior structuring unit is configured to be combinable in a modular manner.

Document US 2001/028561 A1 discloses a container or receptacle having luminosity for emergency or non-lighted conditions to illuminate the surfaces of such containers or receptacles in which to give them visibility in the absence of any light source. The container includes an upper lid section and a lower retaining section having an interior compartment for holding of materials, goods, products, tools, medical equipment or medicine therein. The upper lid section includes interior lid wall surfaces and exterior lid wall surfaces, and the lower retaining section includes interior retaining wall surfaces and exterior retaining wall surfaces. The interior lid wall surfaces and/or the exterior lid surfaces includes a luminescent coating thereon for providing luminosity and for affording visibility to the upper lid section in the absence of any other light source. The interior retaining wall surfaces and/or the exterior retaining wall surfaces includes a luminescent coating thereon for providing luminosity and for affording visibility to the lower retaining section in the absence of any other light source. The luminescent coating includes protective covering means for allowing an increased visibility of the luminescent coating, and for giving resistance to wear and impact of the luminescent coating on the wall surfaces of the container.

Document CN 107 717 921 A discloses a kind of safe electric tool box, including casing and for opening and closing the electronic lock of casing, lid is hinged with casing, electronic lock is arranged on casing, electronic lock includes fingerprint lock, fingerprint acquisition device, memory and fingerprint verifying apparatus, and fingerprint verifying apparatus is connected with fingerprint acquisition device, memory and fingerprint lock, and the electric tool chamber of depression is provided with casing, the inner side of upper lid is provided with the annex hanger bracket of electric tool, and hanger bracket is provided with hook. The advantage of the invention is that the annex can of electric tool is suspended on the hook of hanger bracket, user using when can easily find, can also avoid the loss of electric tool annex; electronic lock is configured with casing, prevents the instrument in electric toolbox from losing, improves security: luminescent layer is provided with the inner surface of electric toolbox, accurately electric tool can also be found by the light of fluorescent material in the case of dark.

Document US 2012/326406 A1 discloses an apparatus for transporting articles having at least one container module that includes a container top having a non-releasable connection portion and a storage container that is selectively non-releasably connected to the container top and/or at least one other storage container. The storage container includes an upper non-releasable connection portion and a lower non-releasable connection portion. The upper non-releasable connection portion is selectively non-releasably connected to 1) a lower non-releasable connection portion of the at least one other storage container or 2) the non-releasable connection portion of the container top. The lower non-releasable connection portion is selectively non-releasably connected to an upper non-releasable connection portion of the at least one other storage container. The container module also includes a latch that releasably connects the storage container to the at least one other storage container if positioned on the container top.

Document US 2004/228114 A1 discloses a luminescent toolbox apparatus includes a toolbox and a luminescent device attached to the toolbox in order to provide luminescence. The luminescent device includes a driver, a sensor connected with the driver and a light source connected with the driver. The driver turns on the light source as it receives a signal from the sensor.

### DESCRIPTION OF THE INVENTION

The technical issue solved by this invention is to obtain a tool holder box with a part of its surface that is luminescent in nature, making it possible for its user to locate it easily in moments of poor visibility. This technical problem is solved with the luminescent surface toolbox of claim 1 which comprises a first body that houses in its inner section a second, third and fourth body, where, on the surface of these bodies there is a luminescent and reflective coating that allows viewing these bodies even in situations of poor visibility, and the bodies feature a surface area whose measurements coincide with the interior area of the first body to be properly lodged therein.

Thanks to its design, the box recommended here will have several luminescent areas on its surface, in such a way that it can be located particularly at those times of the day when there is poor visibility, or on works where there is low visibility.

The box proposed here will have a non-slip surface on its upper part, which will provide greater safety, turning this area into a safe space to deposit certain objects required for the work being carried out in question, and that could cause injuries of differing kinds if they accidentally fell on the operator or another person located in the working area. Or that, due to the physical characteristics of said element, it could shatter upon contact with the ground.

The toolbox can be separated into its different bodies in such a way that the operator can lay out all those elements that are necessary to work quickly and safely. This means that the operator can carry out their tasks in a more streamlined manner, since it will limit the loss of time both in transport and in the collection of material, which will invariably result in lower labor costs that will affect the economic costs associated with the work performed.

The proposed toolbox is intended for use both with bare hands and with gloves, which allows its user to operate with or without gloves whenever they have to move or access it.

Finally, the toolbox advocated here is materialized in such a way that it can support up to a weight of 120 kilograms, which, at certain times, will allow a user weighing less than 120 kg to use it as a stool to access certain places, where they would otherwise be unable to reach, avoiding the use of step ladders.

### BRIEF DESCRIPTION OF THE FIGURES

A brief description is given below of a series of illustrations that help to obtain a deeper understanding of the invention and are expressly related to an implementation of said invention that is presented as a non-limiting example.

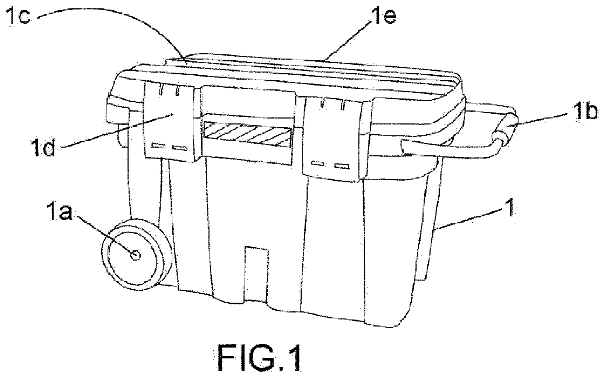

FIG 1. Displays a view of the first body (1) as a component of the toolset carry-box with a luminescent surface, the subject of this utility model.

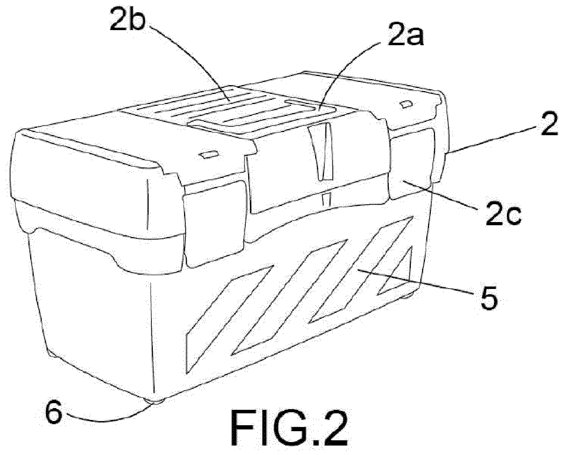

FIG 2. Displays a view of the second body (2) as a component of the toolset carry-box with a luminescent surface.

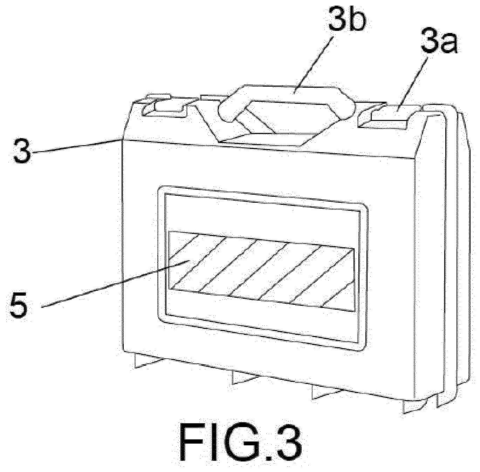

FIG 3. Displays a view of the third body (3) as a component of the toolset carry-box with a luminescent surface.

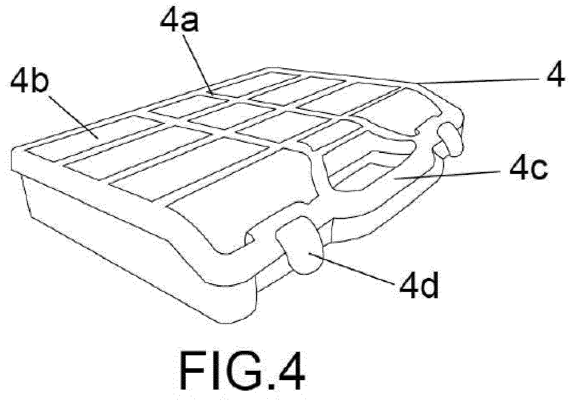

FIG 4. Displays a view of the fourth body (4) as a component of the toolset carry-box with a luminescent surface.

### DESCRIPTION OF A DETAILED EMBODIMENT OF THE INVENTION

A favored embodiment of the invention is shown in the attached figures. More specifically, the toolbox fitted with a luminescent surface that forms the basis of this specification, is characterized in that it comprises a first body (1) that houses within it a second (2), third (3) and fourth (4) body, and where, the surface of these bodies (1, 2, 3, 4) has a luminescent and reflective coating (5) that allows for the viewing of said bodies (1, 2, 3, 4) even in situations of poor visibility. And whereby the bodies (2, 3, 4) will have a surface coinciding with the interior area of the first body (1) to be properly kept apart inside and in a safe way, thus avoiding possible movements.

The first body (1) has on its side dual wheels (1a) with a luminescent coating, which together with an ergonomic telescopic handle (1b) located on the side opposite the wheels (1a), allows said body to be positioned (1) upright, in order to carry the toolbox comfortably.

On its upper part, the first body (1) has a non-slip surface (1c) that facilitates the placement of various elements on said surface (1c) safely. Furthermore, it features a series of luminescent material safety locks (1d) that prevent accidental opening of the first body (1), thus increasing its safety features. Finally, the axes of the first body (1) will be made of a metallic material resistant to various loads, allowing for versatile use in any workplace.

In a particular embodiment, the cover (1e) of the first body (1) will incorporate a tape measure in both millimeters and inches that will serve to facilitate the operator in their tasks.

Likewise, in a non-limiting embodiment, the wheels (1a), with a luminescent coating, will be made of high-safety rubber or another material with equivalent mechanical characteristics.

The second body (2) will have in its upper part, a handle (2a) wholly devised in a luminescent material, and a non-slip surface (2b) that will prevent any object from sliding on its surface. Likewise, it will incorporate safety closures made of luminescent material (2c) that will prevent the accidental opening of the same.

The third body (3) will be specially designed for use as a power tool housing, and therefore, it will have a protective foam coating inside, which will serve to ensure that the aforementioned power tool is correctly stored, thus increasing its working life.

In a particular embodiment, the third body (3) will incorporate safety closures made of luminescent material (3a) that will prevent the accidental opening of said third body (3), and a handle (3b) to facilitate its transportation.

The fourth body (4) will have a transparent upper surface, which will allow for its contents to be viewed so as to locate the small objects stored inside.

Alongside the foregoing, a series of luminescent dividers (4a) will be fitted that split its interior into small housings (4b) and which, in turn, will make it easier to locate them.

In a preferred embodiment, the fourth body (4) will incorporate a handle (4c) and safety closures made of luminescent material (4d) to prevent accidental opening.

Finally, the bodies (1 and 2) come fitted on the under-section and bodies (3 and 4) on their lateral support part, with rubber plugs (6) or another material with equivalent mechanical characteristics, which improve their grip on the surface on which they are placed.

## Claims

1. Luminescent surface toolbox that includes a first body (1) that houses a second (2), third (3) and fourth (4) body inside, and whereby the surface of these bodies (1, 2, 3, 4) features a luminescent and reflective coating (5) that allows for the viewing of said bodies (1, 2, 3, 4) even in situations of poor visibility, and the second, third and fourth bodies (2, 3, 4) feature a surface area whose measurements coincide with the interior area of the first body (1) to be properly housed therein, which is **characterized in that**
the first body (1) in its upper part has a non-slip surface (1c) and a series of safety closures made from luminescent materials (1d) that prevent accidental opening of the first body (1); and where the axes of the first body (1) are made of a metallic material,
the second body (2) has on its upper part, a fitted handle (2a) made entirely from a luminescent material, and a non-slip surface (2b); and, furthermore, said second body (2) incorporates safety closures of luminescent material (2c) that prevent the accidental opening thereof;
and where the third body (3) has a protective foam coating inside; and incorporates a series of safety locks manufactured from luminescent material (3a) that will prevent the accidental opening of said third body (3) along with a handle (3b) to facilitate its transportation;
and whereby the fourth body (4) has a transparent upper surface and will incorporate a handle (4c) and safety closures made of luminescent material (4d) to prevent accidental opening; and whereby, additionally, the fourth body (4) features a series of luminescent dividers (4a) that divides its interior into small housings (4b).

2. Luminescent surface toolbox according to claim 1, wherein the first body (1) has on its side two wheels (1a) with luminescent coating, which together with a telescopic handle (1b) located on the side opposite the wheels (1a) allow for said body (1) to be positioned upright, and to be transported comfortably.

3. Luminescent surface toolbox according to any of the claims 1-2 whereby the first body (1) has a cover (1e) incorporating a tape measure in both millimeters and inches.

4. Luminescent surface toolbox according to any of claims 1-2 where the first and second bodies (1 and 2) will have on their under-section and the third and fourth bodies (3 and 4) on their lateral support part, rubber pegs (6) which improve their grip on the surface on which they are placed.

## Patentansprüche

1. Werkzeugkasten mit lumineszierender Oberfläche, der einen ersten Körper (1) umfasst, der im Inneren einen zweiten (2), dritten (3) und vierten (4) Körper beherbergt, und wobei die Oberfläche dieser Körper (1, 2, 3, 4) eine lumineszierende und reflektierende Beschichtung (5) aufweist, die es ermöglicht, die Körper (1, 2, 3, 4) auch bei schlechten Sichtverhältnissen ermöglicht, und der zweite, dritte und vierte Körper (2, 3, 4) eine Oberfläche aufweisen, deren Abmessungen mit der Innenfläche des ersten Körpers (1) übereinstimmen, der darin ordnungsgemäß untergebracht werden soll, **dadurch gekennzeichnet, dass**
der erste Körper (1) in seinem oberen Teil eine rutschfeste Oberfläche (1c) und eine Reihe von Sicherheitsverschlüssen aus lumineszierenden Materialien (1d) aufweist, die ein versehentliches Öffnen des ersten Körpers (1) verhindern; und wobei die Achsen des ersten Körpers aus einem metallischen Material hergestellt sind,
der zweite Körper (2) an seinem oberen Teil einen aufgesetzten Griff (2a), der vollständig aus einem lumineszierenden Material besteht, und eine rutschfeste Oberfläche (2b) aufweist; und der zweite Körper (2) außerdem Sicherheitsverschlüsse aus lumineszierendem Material (2c) aufweist, die ein versehentliches Öffnen desselben verhindern;
und wobei der dritte Körper (3) innen mit einer schützenden Schaumstoffbeschichtung versehen ist und eine Reihe von Sicherheitsverschlüssen aus lumineszierendem Material (3a) enthält, die ein versehentliches Öffnen des dritten Körpers (3) verhindern, sowie einen Griff (3b), um seinen Transport zu erleichtern;
und wobei der vierte Körper (4) eine transparente Oberseite hat und einen Griff (4c) und Sicherheitsverschlüsse aus lumineszierendem Material (4d) enthält, um ein versehentliches Öffnen zu verhindern; und wobei der vierte Körper (4) zusätzlich eine Reihe von lumineszierenden Teilern (4a) aufweist, die sein Inneres in kleine Gehäuse (4b) unterteilen.

2. Werkzeugkasten mit lumineszierender Oberfläche nach Anspruch 1, wobei der erste Körper (1) an seiner Seite zwei Räder (1a) mit lumineszierender Beschichtung aufweist, die es zusammen mit einem Teleskopgriff (1b), der sich auf der den Rädern (1a) gegenüberliegenden Seite befindet, ermöglichen, den Körper (1) aufrecht zu stellen und bequem zu transportieren.

3. Werkzeugkasten mit lumineszierender Beschichtung nach einem der Ansprüche 1 bis 3, wobei der erste Körper (1) eine Abdeckung (1e) mit einem Maßband in Millimetern und Zoll aufweist.

4. Werkzeugkasten mit lumineszierender Oberfläche nach einem der Ansprüche 1-2, wobei der erste und der zweite Körper (1 und 2) an ihrer Unterseite und der dritte und vierte Körper (3 und 4) an ihrem seitlichen Stützteil Gummistifte (6) aufweisen, die ihren Halt auf der Oberfläche, auf der sie platziert werden, verbessern.

## Revendications

1. Boîte à outils à surface luminescente qui comprend un premier corps (1) qui abrite à l'intérieur un deuxième (2), un troisième (3) et un quatrième (4) corps, et dans laquelle la surface de ces corps (1, 2, 3, 4) présente un revêtement luminescent et réfléchissant (5) qui permet de voir lesdits corps (1, 2, 3, 4) même dans des situations de mauvaise visibilité, et les deuxième, troisième et quatrième corps (2, 3, 4) présentent une surface dont les mesures coïncident avec la surface intérieure du premier corps (1) à loger correctement à l'intérieur, qui est **caractérisé en ce que**
le premier corps (1) présente sur sa partie supérieure une surface antidérapante (1c) et une série de fermetures de sécurité en matériaux luminescents (1d) qui empêchent l'ouverture accidentelle du premier corps (1) ; et où les axes du premier corps sont en matériau métallique,
le deuxième corps (2) comporte, sur sa partie supérieure, une poignée ajustée (2a) entièrement réalisée dans un matériau luminescent, et une surface antidérapante (2b) ; et, en outre, ledit deuxième corps (2) comporte des fermetures de sécurité en matériau luminescent (2c) qui empêchent son ouverture accidentelle ;
et où le troisième corps (3) a un revêtement intérieur en mousse protectrice ; et incorpore une série de fermetures de sécurité en matériau luminescent (3a) qui empêcheront l'ouverture accidentelle dudit troisième corps (3) ainsi qu'une poignée (3b) pour faciliter son transport ;
et dans lequel le quatrième corps (4) a une surface supérieure transparente et incorpore une poignée (4c) et des fermetures de sécurité en matière luminescente (4d) pour empêcher l'ouverture accidentelle ; et dans lequel, en outre, le quatrième corps (4) comporte une série de diviseurs luminescents (4a) qui divisent son intérieur en petits logements (4b).

2. Boîte à outils à surface luminescente selon la revendication 1, dans laquelle le premier corps (1) a sur son côté deux roues (1a) avec un revêtement luminescent, qui ensemble avec une poignée télescopique (1b) située sur le côté opposé aux roues (1a) permettent audit corps (1) d'être positionné verticalement, et d'être transporté confortablement.

3. Boîte à outils à surface luminescente selon l'une quelconque des revendications 1 à 2, le premier corps (1) comportant un couvercle (1e) incorporant un mètre ruban à la fois en millimètres et en pouces.

4. Boîte à outils à surface luminescente selon l'une quelconque des revendications 1-2 où le premier et le deuxième corps (1 et 2) auront sur leur partie inférieure et le troisième et le quatrième corps (3 et 4) sur leur partie d'appui latérale, des picots en caoutchouc (6) qui améliorent leur adhérence sur la surface sur laquelle ils sont placés.
